# EUROPÄISCHE PATENTSCHRIFT

(11) **EP 0 669 675 B1**
(45) Veröffentlichungstag und Bekanntmachung des Hinweises auf die Patenterteilung: **17.03.1999**
(21) Anmeldenummer: 94119279.1
(22) Anmeldetag: 07.12.1994
(51) Int. Cl.: H01R 4/24, H01R 33/08

(54) **Elektrischer Kontakt**
Electrical contact
Contact électrique

(30) Priorität: 24.02.1994 DE 4405966
(43) Veröffentlichungstag der Anmeldung: 30.08.1995
(73) Patentinhaber: Brökelmann, Jaeger & Busse GmbH & Co, D-59755 Arnsberg (DE)
(72) Erfinder: Henrici, Dipl.-Ing. Dieter, D-59757 Arnsberg (DE); Vogt, Karl-Wilhelm, D-59469 Ense (DE)
(74) Vertreter: Patentanwälte Ostriga & Sonnet

(56) Entgegenhaltungen:
- EP-A- 0 382 301
- DE-C- 929 073
- DE-C- 953 626
- US-A- 4 596 433
- US-A- 4 713 019

## Beschreibung

Die Erfindung bezieht sich auf einen elektrischen Anschlußkontakt für den Kontaktstift einer gesockelten Lampe, insbesondere einer Kompaktleuchtstofflampe mit 2G11-Sockel, mit einem ersten Kontaktteil zum insbesondere schraubenlosen Anschluß eines Leiters und mit einem zweiten Kontaktteil, der zwei in Richtung aufeinanderzu federnd ausgebildete Kontaktschenkel umfaßt mit Klemmbereichen zur kraftschlüssigen Kontaktierung des Sockelkontaktstiftes zwischen sich.

Kontakte dieser Art befinden sich in Lampenfassungen, die zur Steckaufnahme von Lampensockeln mit Kontaktstiften dienen. Je nach Art des Einsetzens der Lampe in die Fassung unterscheidet man dabei zwei grundlegende Typen. Die Fassung des einen Typs ist so ausgebildet, daß die Lampe mit ihrem Sockel axial in die Fassung eingesetzt wird, während der andere Fassungstyp so ausgebildet ist, daß die Lampe quer zu ihren Sockelkontaktstiften in die Kontaktlage verschoben wird.

Je nach dem Lampenfassungstyp sind auch die darin verwendeten elektrischen Anschlußkontakte verschieden ausgebildet. Eine bekannte Lampenfassung für axiales Kontaktieren der Kontakte mit den Sockelkontaktstiften weist Anschlußkontakte auf, deren Kontaktschenkel eine Klemmgabel bilden, die sich entgegen der Einsteckrichtung des Sockelkontaktstiftes erstreckt. Elektrische Anschlußkontakte für den anderen Fassungstyp weisen zwei in gleicher Ebene liegende Kontaktschenkel auf, zwischen die der Sockelkontaktstift quer eingeschoben wird.

Aufgabe der Erfindung ist es, einen elektrischen Anschlußkontakt für den Kontaktstift einer gesockelten Lampe anzugeben, der so geschickt ausgestaltet ist, daß er in beiden Fassungstypen, also in Fassungen für axiales Einsetzen der Lampe als auch in Fassungen für seitliches Einsetzen der Lampe, gleichermaßen verwendbar ist.

Die Erfindung löst diese Aufgabe in erster Linie und im wesentlichen dadurch, daß die Klemmbereiche aus abgebogenen Randbereichen der ansonsten in der gleichen Ebene liegenden und darin beweglichen Kontaktschenkel gebildet sind und daß die Randbereiche im wesentlichen in Richtung quer zu dieser Ebene aus ihr heraus verformt sind.

Der neue Kontakt ähnelt im Grundaufbau noch am ehesten demjenigen, der für das seitliche Einsetzen der Lampe nach dem Stand der Technik ausgebildet ist. Durch die erfindungsgemäß gekennzeichneten Merkmale gestattet es dieser Kontakt aber alternativ, daß die Kontaktstifte der Lampe in ihrer Axialrichtung zwischen die aufeinanderzu federnden Kontaktschenkel eingesteckt und sicher darin gehalten werden können.

Um das axiale Einstecken des Sockelkontaktstiftes zu erleichtern, ist nach einer weiteren Ausgestaltung vorgesehen, daß die abgebogenen Randbereiche in Richtung auf ihre freien Enden zueinander konvergierende Abschnitte umfassen, die Einführungsschrägen für das axiale Einstecken des Sockelkontaktstiftes zwischen die Klemmbereiche ausbilden. Auch das Kontaktieren von der Seite her läßt sich dadurch erleichtern, daß die abgebogenen Randbereiche zu den freien Enden der Kontaktschenkel hin divergierende Abschnitte umfassen, die Einführungsschrägen zum Quereinstecken des Sockelkontaktstiftes zwischen die Klemmbereiche ausbilden.

Die beiden unterschiedlichen Fassungstypen, die mit dem erfindungsgemäßen Anschlußkontakt auszurüsten sind, brauchen sich prinzipiell nur dadurch zu unterscheiden, daß dem Klemmbereich des Kontakts entweder eine kreisrunde Öffnung für das axiale Anstecken der Lampe oder ein Langloch oder eine einseitig offene Nut zur Ausführung der erforderlichen Querbewegung vorgeordnet ist. Eine Sicherung, die bei beiden Fassungstypen die Kontaktstifte in kontaktgebender Lage in den Anschlußkontakten sichert, kann fassungsgehäuseseitig, z.B. in Form von Rast federn, angeordnet sein. Solche Mittel braucht der Kontakt selbst nicht aufzuweisen.

Die Erfindung läßt sich im übrigen am besten anhand der nachfolgenden Erläuterungen eines Ausführungsbeispiels anhand der Zeichnungen verstehen. In den Zeichnungen zeigen, jeweils in zwei um 90° zueinander versetzten Seitenansichten und in einer Aufsicht
- Fig. 1: einen entsprechend der Erfindung gestalteten elektrischen Anschlußkontakt in seiner Eignung für seitliche Kontaktgabe mit einem Sockelkontaktstift,
- Fig. 2: eine entsprechende Darstellung im Zusammenhang mit dem axialen Einsetzen des Sockelkontaktstiftes und
- Fig. 3: die Anordnung mit nach einer der beiden Methoden in den Kontakt eingesetztem Sockelkontaktstift.

Der in seiner Gesamtheit mit 10 bezeichnete elektrische Anschlußkontakt weist einen Kontaktteil 11 zum schraubenlosen Anschluß eines nicht dargestellten Leiters auf und einen Kontaktteil 12 zur Aufnahme eines Sockelkontaktstiftes 13.

Der Kontaktteil 12, der Gegenstand der Erfindung ist, weist zwei Kontaktschenkel 14 auf, mit zwei, sich in gleicher Ebene erstreckenden flachen Abschnitten 15. Innerhalb der Ebene, in der diese Abschnitte 15 liegen, sind die Kontaktschenkel 14 aufeinanderzu bzw. voneinander weg federnd ausgebildet bzw. angeordnet. Zwischen den beiden Kontaktschenkeln 14 ist demzufolge ein in der Spaltweite veränderbarer Aufnahmespalt 16 zur klemmschlüssigen Aufnahme eines Sockelkontaktstiftes 13 vorhanden.

Eine wesentliche Besonderheit besteht nun darin, daß die den Spalt 16 begrenzenden und die Klemmzone definierenden Randbereiche 17 nicht wie beim Stand der Technik schlichte gestanzte Kanten, sondern aus der Ebene der Abschnitte 15 abgebogene Randabschnitte 18 sind. Es handelt sich also um Lappen, die in die axiale Einsteckrichtung 19 des Sockelkontaktstiftes 13 weisend nach einwärts gebogen sind. Die abgebogenen Randbereiche 18 erstrecken sich beim Ausführungsbeispiel über die gesamte Länge der Kontaktschenkel 14, jedenfalls zumindest über deren wirksame Länge, also vor allem auch bis in die freien Enden der Kontaktschenkel 14 hinein.

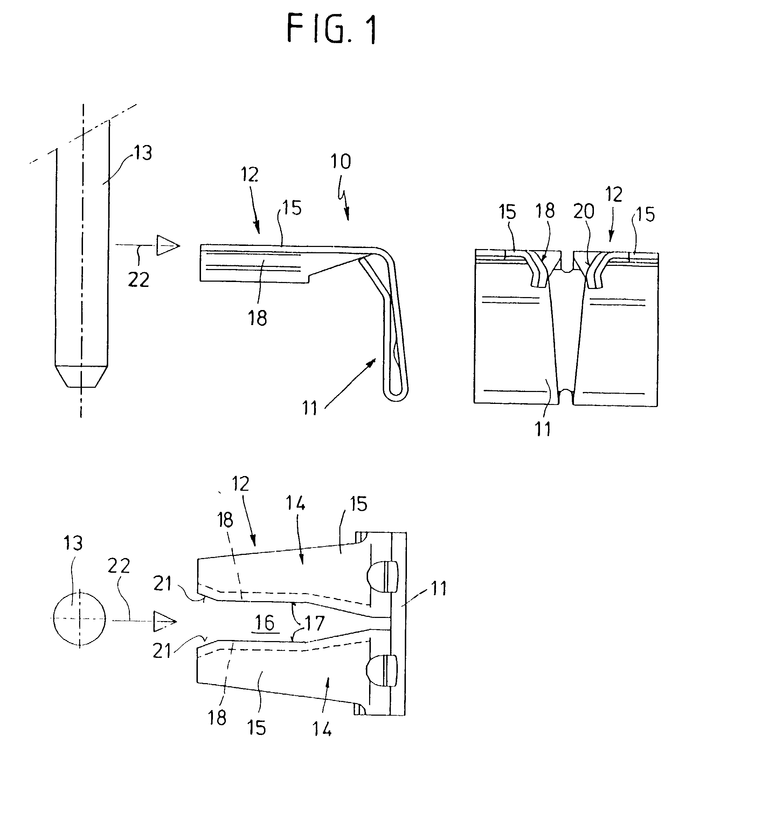

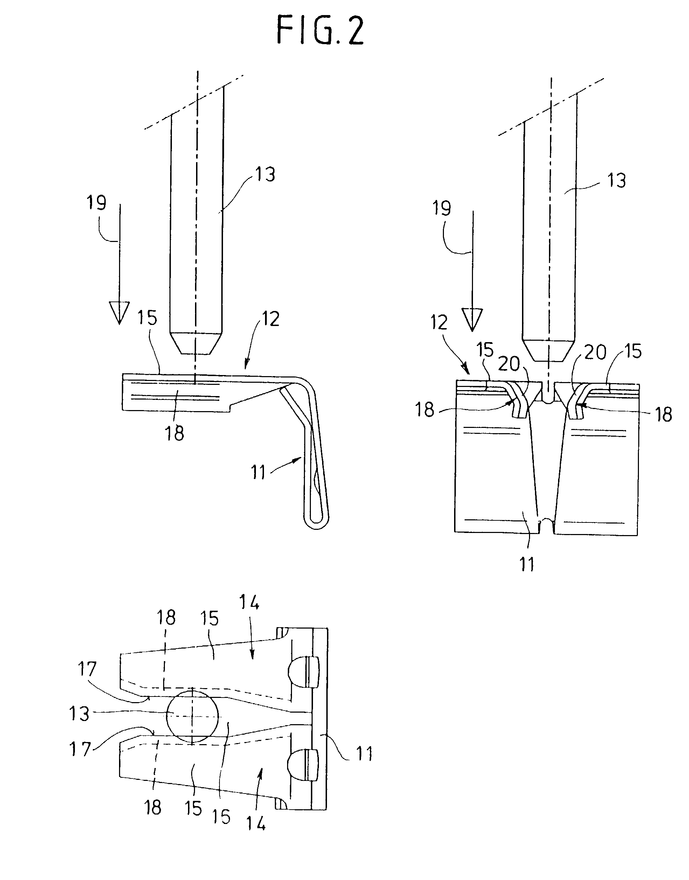

Um das axiale Einführen eines Sockelkontaktstiftes 13 in Richtung des Pfeiles 19 (Fig. 2) zu erleichtern, umfassen die abgebogenen Randbereiche 18 in Richtung auf ihre freien Enden zueinander konvergierende Abschnitte 20 zur Bildung von Einführschrägen. Auch für die durch seitliches Einsetzen einer Lampe gekennzeichnete Kontaktierungsart in Richtung des Pfeiles 22 (Fig. 1) sind solche Einführungsschrägen ausgebildet, und zwar an den Innenseiten der freien Enden der Kontaktschenkel 14 dadurch, daß dort die abgebogenen Randbereiche 18 zu den freien Enden der Kontaktschenkel 14 hin divergierende Abschnitte 21 umfassen.

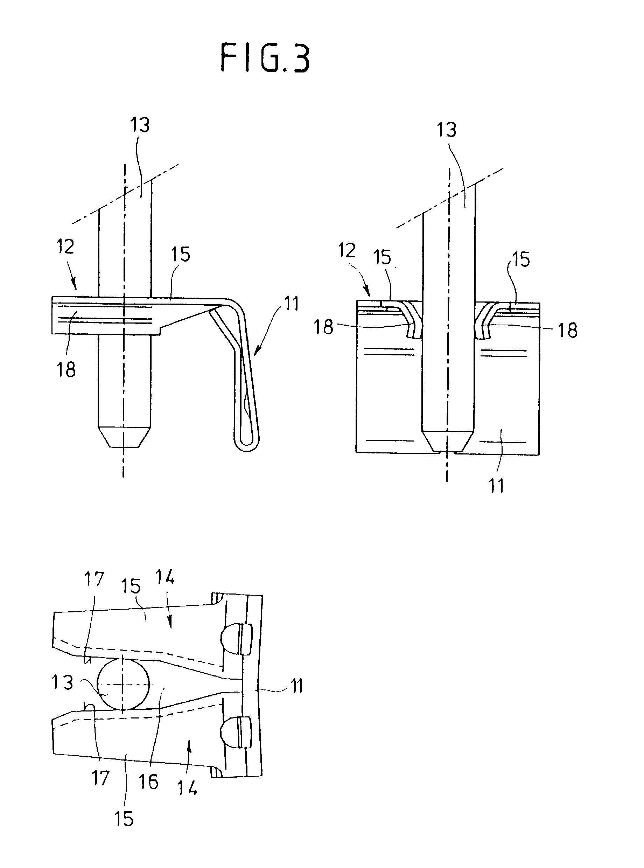

Unabhängig davon, ob ein Lampensockel mit Steckrichtung 19 oder 22 seines Sockelkontaktstiftes 13 in den Kontakt 10 eingebracht wird, ist die Kontaktierungsendlage im wesentlichen stets die in Fig. 3 dargestellte. Die daraus ersichtliche Spreizung der Kontaktschenkel 14 wird lediglich durch unterschiedlich eingeleitete Kräfte hervorgerufen.

Wie die untere Ansicht in Fig. 3 im übrigen zeigt, resultiert die federnde Wirkung bzw. Bewegungsmöglichkeit der Kontaktschenkel aufeinanderzu oder voneinanderweg aus der Biegeelastizität des gewissermaßen den Boden des Kontakts bildenden Leiteranschlußteils 11.

## Patentansprüche

1. Elektrischer Anschlußkontakt für den Kontaktstift (13) einer gesockelten Lampe, insbesondere einer Kompaktleuchtstofflampe mit 2G11-Sockel, mit einem ersten Kontaktteil (11) zum insbesondere schraubenlosen Anschluß eines Leiters und mit einem zweiten Kontaktteil (12), der zwei in Richtung aufeinanderzu federnd ausgebildete Kontaktschenkel (14) umfaßt mit Klemmbereichen zur kraftschlüssigen Kontaktierung des Sockelkontaktstiftes zwischen sich, dadurch gekennzeichnet, daß die Klemmbereiche aus abgebogenen Randbereichen (18) der ansonsten in der gleichen Ebene liegenden und darin beweglichen Kontaktschenkel (14) gebildet sind und daß die Randbereiche (18) im wesentlichen in Richtung quer zu dieser Ebene aus ihr heraus verformt sind.

2. Kontakt nach Anspruch 1, dadurch gekennzeichnet, daß die abgebogenen Randbereiche (18) in Richtung auf ihre freien Enden zueinander konvergierende Abschnitte (20) umfassen, die Einführungsschrägen beim axialen Einstecken des Sockelkontaktstiftes (13) zwischen die Klemmschenkel (14) ausbilden.

3. Kontakt nach Anspruch 1 oder 2, dadurch gekennzeichnet, daß sich die abgebogenen Randbereiche (18) über die gesamte wirksame Länge der Kontaktschenkel (14) hinweg erstrecken.

4. Kontakt nach einem der Ansprüche 1 bis 3, dadurch gekennzeichnet, daß die abgebogenen Randbereiche (18) zu den freien Enden der Kontaktschenkel (14) hin divergierende Abschnitte (21) umfassen, die Einführungsschrägen beim Quereinstecken des Sockelkontaktstiftes (13) zwischen die Klemmschenkel (14) ausbilden.

## Claims

1. Electrical connection contact for the contact pin (13) of a lamp having a base, in particular a compact fluorescent lamp having a 2G11 base, with a first contact part (11) for, in particular, the screwless connection of a conductor and with a second contact part (12) comprising two contact legs (14) which are formed so as to be flexible towards one another and have clamping regions for making non-positive contact with the base contact pin between them, characterised in that the clamping regions are formed from bent edge regions (18) of the contact legs (14), which otherwise lie in the same plane and can move therein, and that the edge regions (18) are worked out of this plane substantially transversely thereto.

2. Contact according to claim 1, characterised in that the bent regions (18) comprise sections (20) which converge in the direction of their free ends and which form lead-in bevels for the axial insertion of the base contact pin (13) between the clamping legs (14).

3. Contact according to claim 1 or 2, characterised in that the bent regions (18) extend over the entire effective length of the contact legs (14).

4. Contact according to one of claims 1 to 3, characterised in that the bent edge regions (18) comprise sections (21) which diverge towards the free ends of the contact legs (14) and which form lead-in bevels for the transverse insertion of the base contact pin (13) between the clamping legs (14).

## Revendications

1. Contact de raccordement électrique, pour la tige de contact (13) d'une lampe montée sur socle, en particulier d'une lampe à luminaire compacte avec un socle 2G11, avec une première partie de contact (11) destinée à établir en particulier un raccordement sans vis d'un conducteur et avec une deuxième partie de contact (12) qui comprend deux branches de contact (14) réalisées de façon élastique avec un rapprochement l'une de l'autre, avec des zones de serrage destinées à effectuer une mise en contact, avec liaison par intervention de force, de la tige de contact de socle entre elles, caractérisé en ce que les zones de serrages sont constituées de zones de bordure (18) repliées des branches de contact (14), qui au reste sont situées dans le même plan et s'y déplacent, et en ce que les zones de bordure (18) sont déformées essentiellement dans la direction transversale par rapport à ce plan, en s'en éloignant.

2. Contact selon la revendication 1, caractérisé en ce que les zones de bordure (18) repliées comprennent dans la direction de leurs extrémités libres des tronçons (20) allant en convergeant les uns vers les autres, qui constituent des pentes d'introduction lors de l'enfichage axial de la tige de contact (13) de socle entre les branches de serrage (14).

3. Contact selon la revendication 1 ou 2, caractérisé en ce que les zones de bordure (18) pliées s'étendent sur toute la longueur active des branches de contact (14).

4. Contact selon l'une des revendications 1 à 3, caractérisé en ce que les zones de bordure (18) pliées comprennent des tronçons (21) qui vont en divergeant en direction des extrémités libres des branches de contact (14), tronçons constituant des pentes d'introduction lors de l'enfichage transversal de la tige de contact (13) de socle entre les branches de serrage (14).
